# EUROPEAN PATENT SPECIFICATION

(11) **EP 1 693 812 B1**
(45) Date of publication and mention of the grant of the patent: **23.04.2008**
(21) Application number: 06002480.9
(22) Date of filing: 07.02.2006
(51) Int. Cl.: G08C 19/28, H04L 12/28

(54) **Method of controlling a plurality of home devices using a single controller and system therefor**
Verfahren und System zur Kontrolle mehrerer Heimgeräte mit einer einzigen Steuereinheit
Méthode de contrôle des dispositifs de maison utilisant une seule unité de commande et système associé

(30) Priority: 21.02.2005 KR 2005014248
(43) Date of publication of application: 23.08.2006
(73) Proprietor: Samsung Electronics Co., Ltd., Suwon-si, Gyeonggi-Do (KR)
(72) Inventor: Lee, Sung-jin, Yongin-si, Gyeonggi-do (KR); Lee, Sang-ho, Seoul (KR)
(74) Representative: Grünecker, Kinkeldey, Stockmair & Schwanhäusser Anwaltssozietät

(56) References cited:
- WO-A-01/54292
- WO-A-02/43022
- US-A1- 2001 033 243
- US-A1- 2003 163 542

## Description

Methods and systems consistent with the present invention relate to a controlling home devices, and more particularly, to controlling numerous home devices using a single controller.

In a home network having "n" number of home devices, "n" number of controllers are required for "n" number of home devices. However, such an arrangement may inconvenience a user, because it is necessary to select the controller corresponding to the respective home device every time a user controls a different home device. Also, in such an arrangement, the user must learn how to operate each of the corresponding controllers.

When a controller is prepared for each home device, the existing controller method sets a key of the controller, which is set by mapping a control pulse at the key, and thus generates one control code only. In order to resolve the above problem, a smart controller (Smart Remocon, for example, or Philips iPronto) was suggested, but a smart controller has a drawback in that users have difficulties in dealing with the machine according to their intuitions. Also, an execution of a specific function through a smart controller has several selection steps, causing inconvenience in the operation of the smart controller and requiring a longer time to execute the specific function.

According to an aspect of the present invention, there is provided a method of controlling a plurality of home devices using a single controller comprising: a home server detecting home devices on a home network where the home server is provided to manage the home devices; the home server receiving control pulse codes of the home devices from a service provider of the home devices; the home server creating a key mapping table from the control pulse codes; and the home server transmitting the key mapping table to one controller.

The detecting the home device by the home server comprises: receiving a profile message of the home devices; confirming whether or not to renew the profile message information of the home devices at the home network; and creating a home device management table when in need of renewal of the profile message information of the home devices.

The receiving the control pulse code comprises: requesting the control pulse code from the service provider; and receiving the control pulse code from the service provider. The step of creating the key mapping table comprises mapping the control pulse code at the key table for controlling the home devices.

The transmitting the key mapping table comprises: the controller requesting the key mapping table from the home server; and synchronizing message communications between the controller and the homer server.

US2003/0163542A1 discloses a remote control signal updated and stored via a network. A universal programmable remote control detects the presence of a control code of a new apparatus in the user's consumer electronics environment. The code, or representatives thereof, are communicated to a network based server. The server maintains a database of codes and distributes the new set of codes to the remote and to other control devices as needed. Accordingly, a control signal is analyzed and updated when a control signal is received. From the control signal, signal properties like signal carrier frequency, the length of individual pulses, time intervals between pulses and others are extracted and compared with signal characteristics that are locally stored in a database or a look up table. If a match is found, the system activates a command set on a user interface, such as buttons, GUI or voice commands. If a match is not found, the system checks whether a connection to a remote computer is available or not. If not, the system enters a waiting routine, which repeats the system check periodically or on command to control whether the connection to the remote computer is available. If a connection is available, the signal characteristics are sent to the remote computer and tested against existing information. The testing can be performed by directly matching the signal characteristics with those available to the remote computer. If a match is found, a set of commands and UE mapping is created and sent to the system. The system stores the information and initiates a process for updating receivers that are registered for the update or at a manufacturing site.

WO01/54292A1 discloses a business model and network architecture supporting the interests of network operators, manufacturers of IP-connected electronic equipment and end users of the equipment. A set top box is marketed together with a programmable remote. The remote has a specific button to connect the set top box to a specific server on the internet. The consumer can notify the server of his/her other consumer equipment which he/she desires to be controlled through the same remote as that which comes with the set top box. The server downloads, to the set top box, data representative of the relevant control codes. The set box is provided with means for programming the remote with these codes. In return, the server obtains detailed and accurate information about this consumer equipment. A reliable consumer base can thus be built to streamline helpdesk operations.

It is the object of the present invention to provide an improved method for controlling a plurality of home devices using a single controller and a system thereof.

This object is solved by the subject matter of the independent claims.

Preferred embodiments are defined by the dependent claims.

According to another aspect of the present invention, there is provided a system for controlling a plurality of home devices using a single controller, including a home server for receiving a control pulse code used to control the home devices from a service provider and creating the key mapping table necessary for controlling the home devices from the control pulse code, and the controller for receiving the key mapping table from the home server and detecting the home devices on the home network.

The home server includes a device profile managing part for detecting the home devices on the home network and receiving a control pulse code to control the home devices from the service provider, a key table processing part for creating the key mapping table necessary for controlling the home devices from the obtained control pulse code, and a message processing part for transmitting the key mapping table to one controller which is provided to control home devices. The device profile managing part has an automatic detecting part for receiving a profile message of the home device sent by the home device and a code requesting part for requesting the control pulse code from the service provider.

The key table processing part includes a control pulse code mapping functioning part for mapping the key table for controlling the home devices.

The aspects of the present invention will become more apparent by describing in detail exemplary embodiments thereof with reference to the accompanying drawings, in which:

FIG. 1 is a diagram of a home network system according to an exemplary embodiment of the present invention;

FIG. 2 is a conceptual view of a control system which controls a plurality of home devices using one controller according to an exemplary embodiment of the present invention;

FIG. 3A shows a functional block diagram of a device profile managing unit of a home server on a control system which controls a plurality of home devices using a single controller according to an exemplary embodiment of the present invention;

FIG. 3B is a flowchart of a device profile managing unit of a home server on a control system which controls a plurality of home devices using a single controller according to an exemplary embodiment of the present invention;

FIG. 4A is a functional block diagram of a key table processing unit of a home server on a control system which controls a plurality of home devices using a single controller according to an exemplary embodiment of the present invention;

FIG. 4B is a flowchart of the key table processing unit of a home server on a control system which controls a plurality of home devices using a single controller according to an exemplary embodiment of the present invention;

FIG. 5A is a functional block diagram of a message processing unit of a home server on a home device control system which controls a plurality of home devices using a single controller according to an exemplary embodiment of the present invention;

FIG. 5B is a message sequence chart of the message processing unit of a home server on a control system which controls a plurality of home devices using a single controller according to an exemplary embodiment of the present invention;

FIG. 6A is a message sequence chart of a registration process of the home devices in a control method which controls a plurality of home devices using a single controller according to an exemplary embodiment of the present invention; and

FIG. 6B is a message sequence chart of a control method which controls a plurality of home devices using a single controller according to an exemplary embodiment of the present invention.

Hereinafter, exemplary embodiments of the present invention will be described in detail with reference to the accompanying drawing figures.

In the following description, the same reference numerals are used to refer to the same elements even in different drawings. The matters defined in the following description such as a detailed construction and elements are merely provided to assist one of ordinary skill in the art in a comprehensive understanding of the invention. Thus, it is contemplated that the present invention can be carried out without those defined matters. Also, well-known functions or constructions are not described in detail in the following description since they would obscure the invention in unnecessary detail.

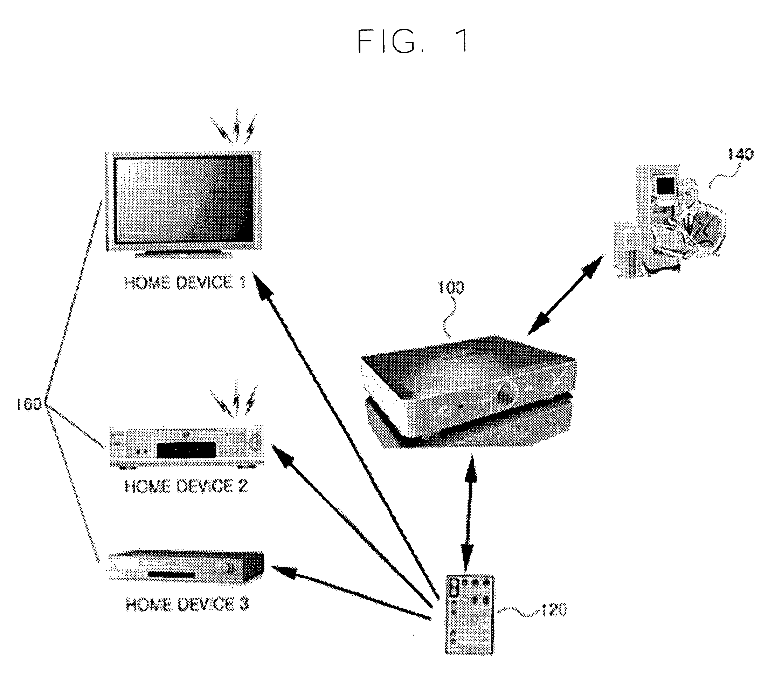

FIG. 1 is a diagram of a home network system according to an exemplary embodiment of the present invention. The home network system in FIG. 1 includes a home server 100, a controller 120, a service provider 140, and home devices 160. The home server 100 transmits a media source to the home devices 160. The home devices 160 execute the transmitted media source and the controller 120 controls the home devices 160.

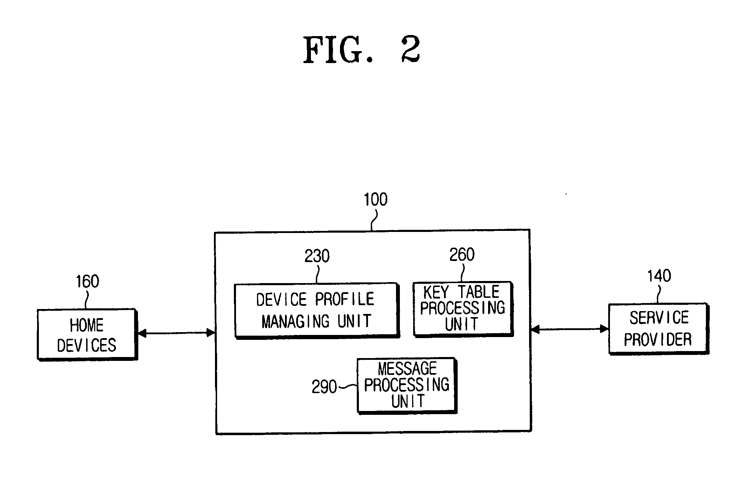

FIG. 2 is a conceptual diagram of a control system which controls a plurality of home devices 160 using one controller according to an exemplary embodiment of the present invention. The home server 100 includes a device profile managing unit 230, a key table processing unit 260, and a message processing unit 290. The device profile managing unit 230 registers and manages profiles of the home devices 160 of the home network system. The key table processing unit 260 creates a key mapping table 410, to control each of the home devices 160, respectively. The message processing unit 290 transmits the above mentioned key mapping table 410 to the controller 120 so that the controller 120 can control each of the home devices 160.

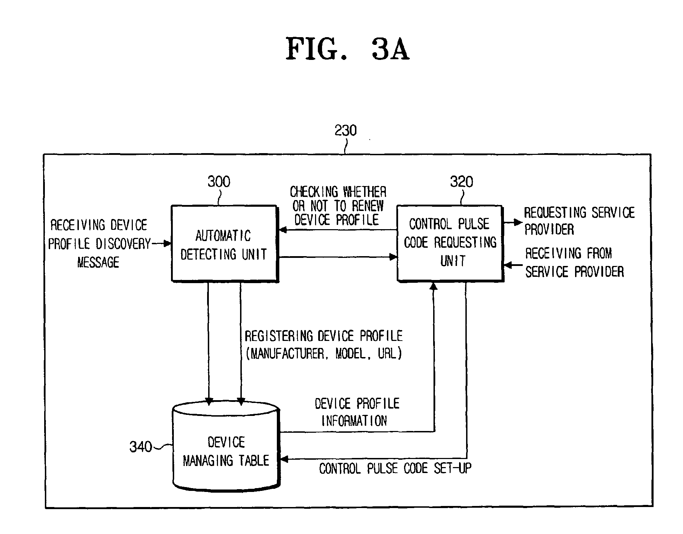

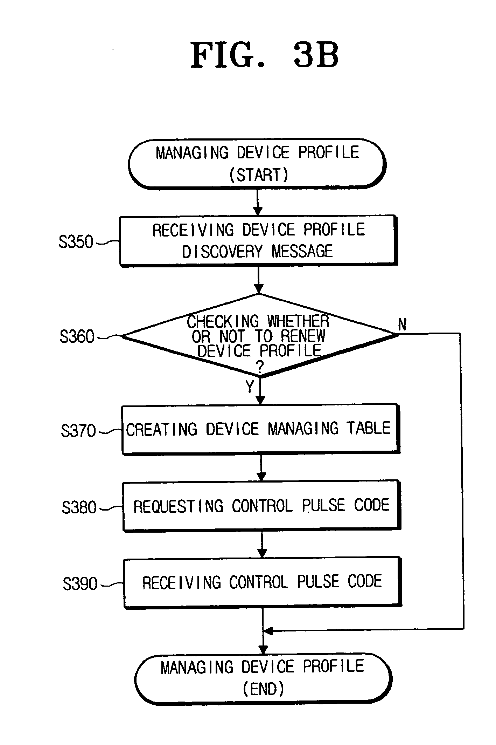

FIG. 3A is a functional block diagram of a device profile managing unit included in a home server 100 of a control system which controls a plurality of home devices 160 using one controller 120 according to an exemplary embodiment of the present invention. FIG. 3B shows a flowchart of the device profile managing unit 230 included in a home server 100 of a control system which controls a plurality of home devices 160 using one controller 120 according to an exemplary embodiment of the present invention. Referring to 3A, the device profile managing unit 230 includes an automatic detecting unit 300 and a control pulse code requesting unit 320. The automatic detecting unit 300 creates the device managing table 340.

There will be described an operation principle of the device profile managing unit 230 according to an exemplary embodiment of the present invention, with reference to FIGS. 3A and 3B. A newly installed home device of the home network sends a device profile discovery message informing its existence to the system. The automatic detecting unit 300 receives the device profile discovery message sent by the newly installed home device within the home network system (operation S350). The device profile managing unit 230 obtains device profile information such as, for example, the manufacturer, model or Uniform Resource Locator (URL) through the automatic detecting unit 300.

After checking whether or not to renew the device profile (operation S360), when it is judged to renew the device profile from the device profile checking process discussed above, the device profile managing unit 230 creates the device managing table 340 through the above mentioned device profile information(operation S370). The control pulse code requesting unit 320 reads the device profile information from the device managing table 340. The control pulse code requesting unit 320 requests the control pulse code from the service provider 140 through the URL of the device profile information (operation S380).

The service provider 140 transmits the control pulse code to the control pulse code requesting unit 320. After receiving the control pulse code (operation S390), the control pulse code requesting unit 320 records the control pulse code at the device managing table 340.

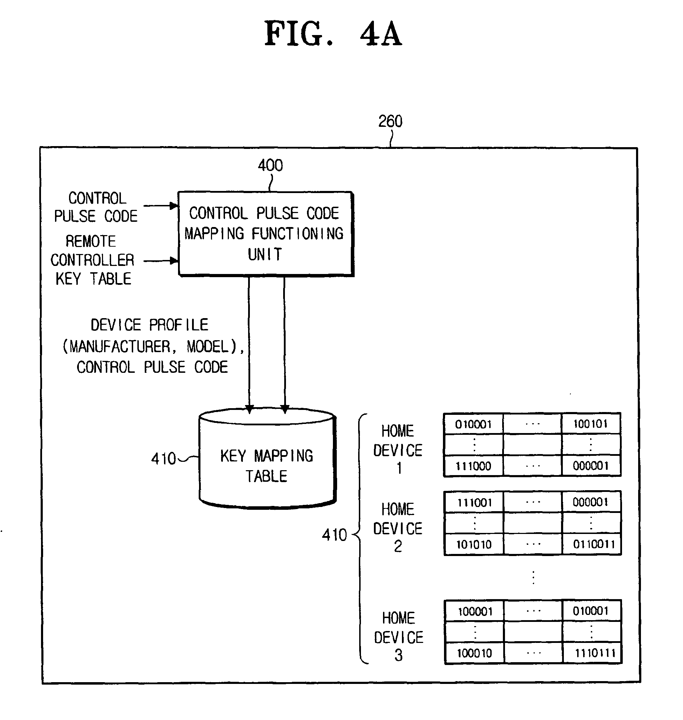

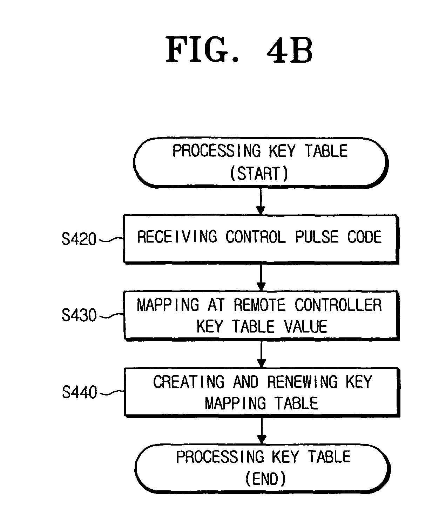

FIG. 4A is a functional block diagram of a key table processing unit 260 included in a home server 100 on the control system which controls a plurality of home devices 160 using one controller according to an exemplary embodiment of the present invention. FIG. 4B is a flowchart of the key table processing unit 260 included in a home server 100 on the control system which controls a plurality of home devices 160 using one controller according to an exemplary embodiment of the present invention. Referring to FIG. 4A, the key table processing unit 260 according to an exemplary embodiment of the present invention, includes a control pulse code mapping functioning unit 400. A description of an operation principle of the key table processing unit 260 according to an exemplary embodiment of the present invention, is described below with reference to FIGS. 4A and 4B. The control pulse code mapping functioning unit 400 receives the control pulse code transmitted from the service provider 140 from the control pulse code requesting unit 320 of the abovementioned device profile managing unit 230 (operation S420).

The control pulse code mapping functioning unit 400 is input with information such as the manufacturer and the model of the device profile registered at the device managing table 340. The control pulse code mapping functioning unit 400 maps the control pulse code of the corresponding home device 160 to a key table value for controlling the corresponding one of the home devices 160, using the information of the device profile (operation S430). Through the above mentioned process, the control pulse code mapping functioning unit 400 creates the key mapping table 410 for controlling a newly installed home device of the home devices 160 at the home network system (operation S440). When the control pulse code of an existing one of the home devices 160 of the home network system is changed, the existing key mapping table 410 is renewed.

As a result, there exists a key mapping table 410 with respect to each of the home devices 160 of the home network system. Each of the key mapping tables 410 are transmitted to one controller 120, through a message processing process described below, and are used for controlling each of the home devices 160.

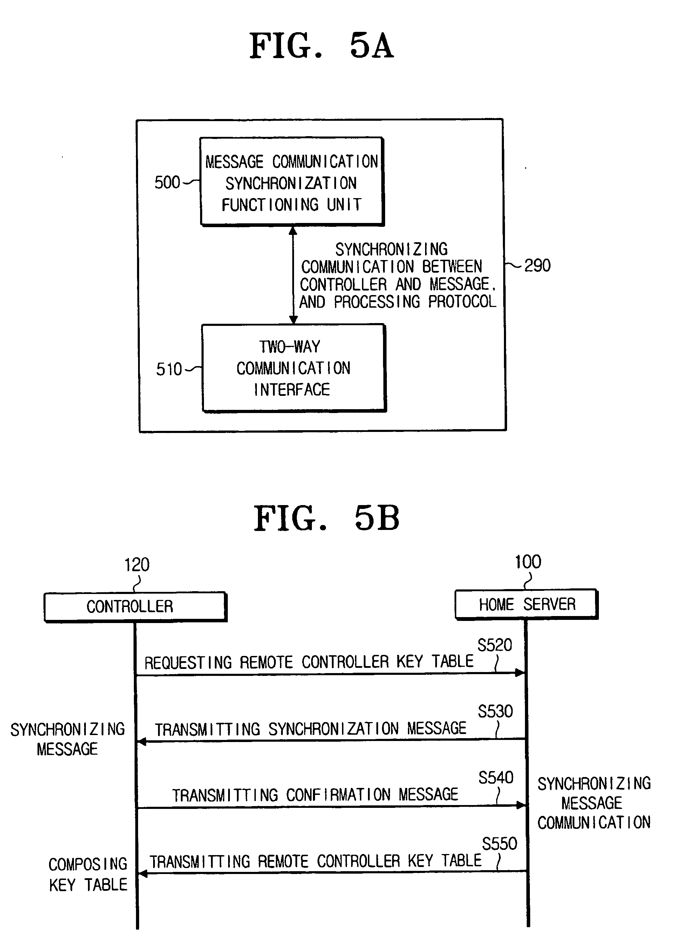

FIG. 5A is a functional block diagram of a message processing unit 290 included in a home server 100 on the control system which controls a plurality of home devices 160 using one controller according to an exemplary embodiment of the present invention. As illustrated in FIG. 5A, the message processing unit 290 according to an exemplary embodiment of the present invention includes a message communication synchronization functioning unit 500 and a two-way communication interface 510. The message communication synchronization functioning unit 500 and the two-way communication interface 510 synchronizes communication between the controller 120 and message, and processes protocol.

FIG. 5B is a message sequence chart of the message processing unit 290 included in a home server 100 on the control system which controls a plurality of home devices 160 using one controller according to an exemplary embodiment of the present invention. An operation principle of the message processing unit 290 according to an exemplary embodiment of the present invention is described below with reference to FIG. 5B. The controller 120 requests the key mapping table 410 from the home server 100 (operation S520). The home server 100 goes through the message communication synchronization process with the controller 120 comprising transmitting a synchronization message from the home server 100 to the controller 120 (operation S530) and transmitting a confirmation message from the controller 120 to the home server 100 (operation S540). Further, the home server 100 transmits the key mapping table 410 to the controller 120 (operation S550).

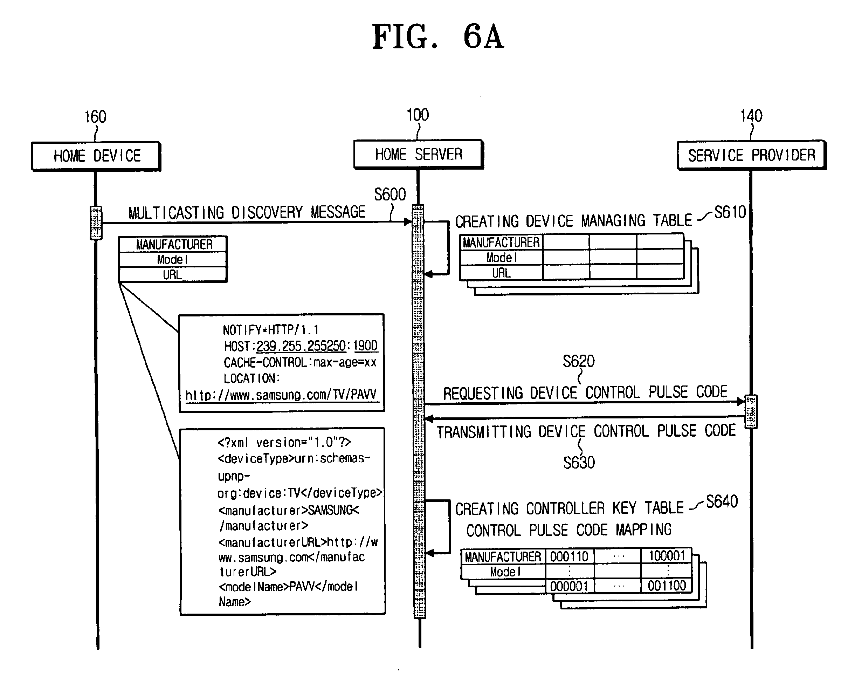

FIG. 6A is a message sequence chart of a registration process of one of the home devices 160 with a home server 100 on the control system which controls a plurality of home devices 160 using one controller according to an exemplary embodiment of the present invention. The message sequence in FIG. 6A includes a signal between one of the home devices 160 and the home server 100 and a signal flow within the home server 100, and a signal flow between the home server 100 and the service provider 140. In a processing operation of a registration processor, one of the home devices 160 sends the device profile discovery message which indicates the existence of the home device (operation S600).

The home server 100 receives the device profile discovery message and the device profile managing unit 230 obtains the device profile information. When needing to renew the device profile such as when a new home device is installed, the home server 100 creates a device managing table (operation S610), and requests the device control pulse code from the service provider 140 (operation S620). The service provider 140 transmits the device control pulse code to the home server 100 (operation S630) and the home server 100 creates the controller key mapping table 410 through the control pulse code mapping (operation S640).

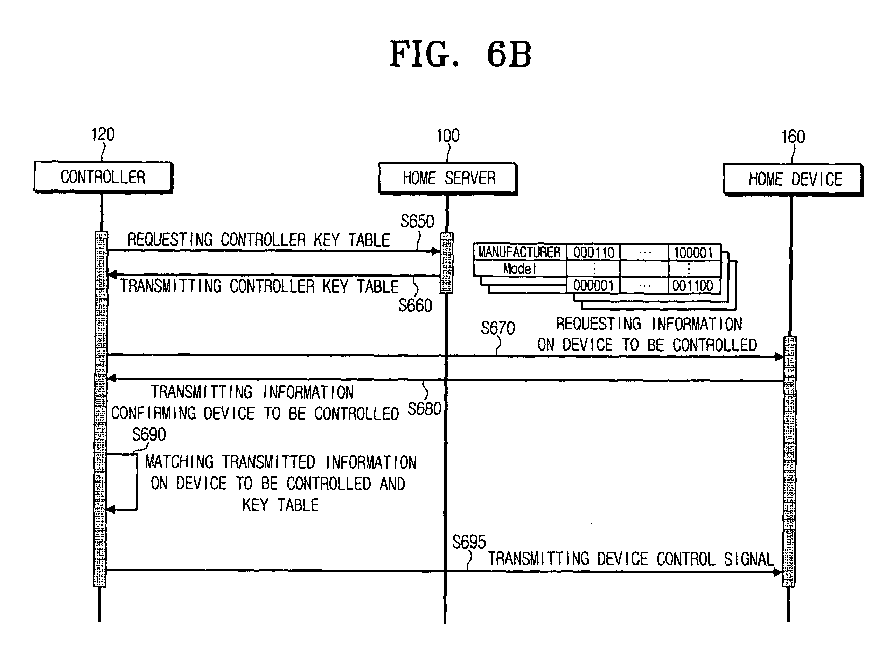

FIG. 6B is a message sequence chart for a home server 100 on the control system which controls a plurality of home devices 160 using one controller according to an exemplary embodiment of the present invention. The message sequence shown in FIG. 6B includes a signal flow between the controller 120 and the home server 100, and a signal flow between the controller 120 and a particular one of the home devices 160. In a controller 120, setup and a control operation of the particular one of the home devices 160 is shown in FIG. 6B, wherein the controller 120 requests the controller key mapping table 410 to the home server 100 (operation S650). The home server 100 transmits the controller key mapping table 410 to the controller 120 (operation S660).

The controller 120 transmits a request for information regarding a device, to be controlled by controller 120, to the particular one of the home device 160 (operation S670). The particular one of the home devices 160 transmits information confirming the device to be controlled by the controller 120 to the controller 120 (operation S680). In operation S90, the controller 120 matches the abovementioned information confirming the device to be controlled by the controller 120, which is transmitted from one of the home devices at operation S680, and the key mapping table 410, which is transmitted from the home server 100 operation S660. The controller 120 transmits a device control signal to the particular one of the home devices 160 (operation S695) and controls an operation of the particular one of the home devices 160.

As mentioned above, a plurality of home devices 160 are controlled by a single controller 120 in a home network system. As a result, a user does not need to have a plurality of controllers corresponding to the plurality of home devices 160 and does not need to learn how to operate such a plurality of controllers.

While the invention has been shown and described with reference to certain exemplary embodiments thereof, it will be understood by those skilled in the art that various changes in form and details may be made to the exemplary embodiments of the invention without departing from the scope of the embodiments of the present invention as defined by the following claims.

## Claims

1. A method of controlling a plurality of home devices (160) using one controller (120), the method comprising:
detecting at a home server (100) home devices (160) on a home network, wherein the home server (100) manages the home devices (160);
receiving (S420) at the home server (100) control pulse codes of the home devices (160);
creating (440) at the home server (100) a key mapping table using the received control pulse codes; and
the home server (100) transmitting the key mapping table from the home server (100) through the home network to the one controller (120) which controls the home devices (160).

2. The method of claim 1, wherein the home server (100) receives the control pulse codes of the home devices (160) from a service provider (140).

3. The method of claim 2, wherein the detecting the home devices (160) comprises:
receiving a profile message comprising profile information of the home devices;
determining whether to renew profile message information of the home devices; and
creating a home device management table if it is determined to renew the profile message information of the home devices.

4. The method of claim 2, wherein the receiving the control pulse codes comprises:
requesting the control pulse codes from the service provider; and
receiving the control pulse codes from the service provider (140).

5. The method of claim 2, wherein the creating the key mapping table comprises mapping the control pulse codes at the key mapping table so as to enable the controller (120) to control the home devices (160).

6. The method of claim 2, wherein the transmitting the key mapping table comprises:
requesting at the controller (120) the key mapping table from the home server (100); and
synchronizing message communications between the controller and the home server.

7. The method of claim 1, wherein the mapping table maps the control pulse codes of the home devices to a key table value so as to control a corresponding one of the home devices.

8. A system for controlling a plurality of home devices (160) of a home network, the system comprising:
a home server (100) adapted to receive control pulse codes that are used to control the home devices (160), and adapted to key mapping table using the received control pulse codes; and
one controller (120) adapted to receive the key mapping table from the home server H (100) and adapted to control the home devices on the home network.

9. The system of claim 8, wherein the control pulse codes are received from a service provider (140).

10. The system of claim 8, wherein the home server (100) comprises:
a device profile managing unit (230) which detects the home devices of the home network and receives the control pulse codes from the service provider (140);
a key table processing unit (260) which creates the key mapping table from the received control pulse codes; and
a message processing unit which transmits the key mapping table to the one controller (120) which controls the home devices (160).

11. The system of claim 10, wherein the device profile managing unit (230) comprises:
an automatic detecting unit (300) which receives a home device profile message from the home devices (160) sent; and
a code requesting unit (320) which requests the control pulse codes from the service provider (140).

12. The system of claim 10, wherein the key table processing unit (260) includes a control pulse code mapping functioning unit (400) which maps the key table which is used to control the home devices (160).

13. The system of claim 8, wherein the mapping table maps the control pulse codes of the home devices (160) to a key table value so as to control a corresponding one of the home devices (160).

## Patentansprüche

1. Verfahren zum Steuern einer Vielzahl von Heim-Vorrichtungen (160) unter Verwendung einer Steuereinheit (120), wobei das Verfahren umfasst:
Erfassen von Heim-Vorrichtungen (160) in einem Heim-Netz an einem Heim-Server (100), wobei der Heim-Server (100) die Heim-Vorrichtungen (160) verwaltet; Empfangen (S420) von Steuerimpuls-Codes der Heim-Vorrichtungen (160) an dem Heim-Server (100);
Erzeugen (440) einer Schlüsselzuordnungstabelle unter Verwendung der empfangenen Steuerimpuls-Codes an dem Heim-Server (100); und
Senden der Schlüsselzuordnungstabelle von dem Heim-Server (100) über das Heim-Netz zu der einen Steuereinheit (120), die die Heim-Vorrichtungen (160) steuert, durch den Heim-Server (100).

2. Verfahren nach Anspruch 1, wobei der Heim-Server (100) die Steuerimpuls-Codes der Heim-Vorrichtungen (160) von einem Dienst-Provider (140) empfängt.

3. Verfahren nach Anspruch 2, wobei das Erfassen der Heim-Vorrichtungen (160) umfasst:
Empfangen einer Profil-Nachricht, die Profil-Informationen der Heim-Vorrichtungen umfasst;
Feststellen, ob Informationen der Profil-Nachrichten der Heim-Vorrichtungen zu erneuern sind; und
Erzeugen einer Heim-Vorrichtungs-Verwaltungstabelle, wenn festgestellt wird, dass die Informationen der Profil-Nachrichten der Heim-Vorrichtungen zu erneuern sind.

4. Verfahren nach Anspruch 2, wobei das Empfangen der Steuerimpuls-Codes umfasst:
Anfordern der Steuerimpuls-Codes von dem Dienst-Provider, und
Empfangen der Steuerimpuls-Codes von dem Dienst-Provider (140).

5. Verfahren nach Anspruch 2, wobei das Erzeugen der Schlüsselzuordnungstabelle Zuordnen der Steuerimpuls-Codes in der Schlüsselzuordnungstabelle umfasst, um die Steuereinheit (120) zu befähigen, die Heim-Vorrichtungen (160) zu steuern.

6. Verfahren nach Anspruch 2, wobei das Senden der Schlüsselzuordnungstabelle umfasst:
Anfordern der Schlüsselzuordnungstabelle von dem Heim-Server (100) an der Steuereinheit (120); und
Synchronisieren von Nachrichtenübertragungen zwischen der Steuereinheit und dem Heim-Server.

7. Verfahren nach Anspruch 1, wobei die Zuordnungstabelle die Steuerimpuls-Codes der Heim-Vorrichtungen einem Schlüsseltabellenwert zuordnet, um eine entsprechende der Heim-Vorrichtungen zu steuern.

8. System zum Steuern einer Vielzahl von Heim-Vorrichtungen (160) eines Heim-Netzwerks, wobei das System umfasst:
einen Heim-Server (100), der so eingerichtet ist, dass er Steuerimpuls-Codes empfängt, die dazu dienen, die Heim-Vorrichtungen (160) zu steuern, und so eingerichtet ist, dass er eine Schlüsselzuordnungstabelle unter Verwendung der empfangenen Steuerimpuls-Codes erzeugt; und
eine Steuereinheit (120), die so eingerichtet ist, dass sie die Schlüsselzuordnungstabelle von dem Heim-Server (100) empfängt, und so eingerichtet ist, dass sie die Heim-Vorrichtungen in dem Heim-Netz steuert.

9. System nach Anspruch 8, wobei die Steuerimpuls-Codes von einem Dienst-Provider (140) empfangen werden.

10. System nach Anspruch 8, wobei der Heim-Server (100) umfasst:
eine Vorrichtungsprofil-Verwaltungseinheit (230), die die Heim-Vorrichtungen des Heim-Netzes erfasst und die Steuerimpuls-Codes von dem Dienst-Provider (140) empfängt;
eine Schlüsseltabellen-Verarbeitungseinheit (260), die die Schlüsselzuordnungstabelle aus den empfangenen Steuerimpuls-Codes erzeugt; und
eine Nachrichten-Verarbeitungseinheit, die die Schlüsselzuordnungstabelle zu der einen Steuereinheit (120) sendet, die die Heim-Vorrichtungen (160) steuert.

11. System nach Anspruch 10, wobei die Vorrichtungsprofil-Verwaltungseinheit (230) umfasst:
eine automatische Erfassungseinheit (300), die eine von den Heim-Vorrichtungen (160) gesendete Heim-Vorrichtungsprofil-Nachricht empfängt; und
eine Code-Anforderungseinheit (320), die die Steuerimpuls-Codes von dem Dienst-Provider (140) anfordert.

12. System nach Anspruch 10, wobei die Schlüsseltabellen-Verarbeitungseinheit (260) eine Steuerimpuls-Code-Zuordnungs-Funktionseinheit (400) enthält, die die Schlüsseltabelle zuordnet, die zum Steuern der Heim-Vorrichtungen (160) verwendet wird.

13. System nach Anspruch 8, wobei die Zuordnungstabelle die Steuerimpuls-Codes der Heim-Vorrichtungen (160) einem Schlüsseltabellenwert zuordnet, um eine entsprechende der Heim-Vorrichtungen (160) zu steuern.

## Revendications

1. Procédé de commande d'une pluralité de dispositifs domestiques (160) utilisant une unité de commande (120), le procédé comprenant :
la détection au niveau d'un serveur domestique (100) de dispositifs domestiques (160) sur un réseau domestique, dans lequel le serveur domestique (100) gère les dispositifs domestiques (160) ;
la réception (S420) au niveau du serveur domestique (100) de codes d'impulsions de commande des dispositifs domestiques (160) ;
la création (440) au niveau du serveur domestique (100) d'une table de mise en correspondance principale utilisant les codes d'impulsions de commande ; et
la transmission par le serveur domestique (100) de la table de mise en correspondance principale du serveur domestique (100) à travers le réseau domestique vers cette unité de commande (120) qui commande les dispositifs domestiques (160).

2. Procédé selon la revendication 1, dans lequel le serveur domestique (100) reçoit les codes d'impulsions de commande des dispositifs domestiques (160) en provenance d'un fournisseur de service (140).

3. Procédé selon la revendication 2, dans lequel la détection des dispositifs domestiques (160) comprend :
la réception d'un message de profil comprenant l'information de profil des dispositifs domestiques ;
la détermination pour savoir s'il faut remplacer l'information de message de profil des dispositifs domestiques ; et
la création d'une table de gestion des dispositifs domestiques s'il est déterminé qu'il faut remplacer l'information de message de profil des dispositifs domestiques.

4. Procédé selon la revendication 2, dans lequel la réception de codes d'impulsions de commande comprend :
la demande des codes d'impulsions de commande auprès du fournisseur de service; et
la réception des codes d'impulsions de commande du fournisseur de service (140).

5. Procédé selon la revendication 2, dans lequel la création de la table de mise en correspondance principale comprend la mise en correspondance des codes d'impulsions principaux au niveau de la table de mise en correspondance principale afin de permettre à l'unité de commande (120) de commander les dispositifs domestiques (160).

6. Procédé selon la revendication 2, dans lequel la transmission de la table de mise en correspondance principale comprend :
la demande au niveau de l'unité de commande (120) de la table de mise en correspondance principale à partir du serveur domestique (100); et
la synchronisation de communication de messages entre l'unité de commande et le serveur domestique.

7. Procédé selon la revendication 1, dans lequel la table de mise en correspondance met les codes d'impulsions de commande des dispositifs domestiques en correspondance avec une valeur de table principale afin de commander l'un correspondant des dispositifs domestiques.

8. Système permettant de commander une pluralité de dispositifs domestiques (160) d'un réseau domestique, le système comprenant :
un serveur domestique (100) adapté à recevoir des codes d'impulsions de commande qui sont utilisés pour commander les dispositifs domestiques (160), et adaptés à une table de mise en correspondance principale utilisant les codes d'impulsions de commande reçues ; et
une seule unité de commande (120) adaptée à recevoir la table de mise en correspondance principale du serveur domestique (100) et adaptée à commander les dispositifs domestiques sur le réseau domestique.

9. Système selon la revendication 8, dans lequel les codes d'impulsions de commande sont reçus d'un fournisseur de service (140).

10. Système selon la revendication 8, dans lequel le serveur domestique (100) comprend :
une unité de gestion des profils de dispositifs (230) qui détecte les dispositifs domestiques du réseau domestique et reçoit les codes d'impulsions de commande du fournisseur de service (140) ;
une unité de traitement de table principale (260) qui crée la table de mise en correspondance principale à partir des codes d'impulsions de commande reçus ; et
une unité de traitement de message qui transmet la table de mise en correspondance principale à la seule unité de commande (120) qui commande les dispositifs domestiques (160).

11. Système selon la revendication 10, dans lequel l'unité de gestion de profils de dispositifs (230) comprend :
une unité de détection automatique (300) qui reçoit un message de profil de dispositif domestique envoyé par les dispositifs domestiques (160) ; et
une unité de demande de codes (320) qui demande les codes d'impulsions de commande au fournisseur de service (140).

12. Système selon la revendication 10, dans lequel l'unité de traitement de table principale (260) comprend une unité de fonctionnement de mise en correspondance de codes d'impulsions (400) qui met en correspondance la table principale qui est utilisée afin de commander les dispositifs domestiques (160).

13. Système selon la revendication 8, dans lequel la table de mise en correspondance met les codes d'impulsion de commande des dispositifs domestiques (160) en correspondance avec une valeur de table principale afin de commander l'un correspondant des dispositifs domestiques (160).
